(19) Europäisches Patentamt / European Patent Office / Office européen des brevets

(11) **EP 2 738 855 B1**

(12) **EUROPEAN PATENT SPECIFICATION**

(45) Date of publication and mention of the grant of the patent:
**08.11.2017 Bulletin 2017/45**

(51) Int Cl.:
*H01M 4/66* *(2006.01)*   *H01G 11/66* *(2013.01)*
*H01M 4/13* *(2010.01)*   *H01G 11/68* *(2013.01)*
*H01G 11/26* *(2013.01)*   *H01G 11/70* *(2013.01)*
*H01M 4/62* *(2006.01)*   *H01M 10/0525* *(2010.01)*

(21) Application number: **12820071.4**

(22) Date of filing: **27.07.2012**

(86) International application number:
**PCT/JP2012/069121**

(87) International publication number:
**WO 2013/018686 (07.02.2013 Gazette 2013/06)**

(54) **COLLECTOR AND ELECTRODE STRUCTURE, NON-AQUEOUS ELECTROLYTE CELL, ELECTRICAL DOUBLE LAYER CAPACITOR, LITHIUM ION CAPACITOR, OR ELECTRICITY STORAGE COMPONENT USING SAME**

KOLLEKTOR UND ELEKTRODENSTRUKTUR, ZELLE MIT WASSERFREIEM ELEKTROLYT, ELEKTRISCHER DOPPELSCHICHTKONDENSATOR, LITHIUMIONENKONDENSATOR ODER STROMSPEICHERUNGSKOMPONENTE DAMIT

COLLECTEUR ET STRUCTURE D'ÉLECTRODE, CELLULE À ÉLECTROLYTE NON AQUEUX, CONDENSATEUR DOUBLE COUCHE ÉLECTRIQUE, CONDENSATEUR AUX IONS LITHIUM OU COMPOSANT DE STOCKAGE D'ÉLECTRICITÉ UTILISANT CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 JP 2011166391**

(43) Date of publication of application:
**04.06.2014 Bulletin 2014/23**

(73) Proprietors:
• **UACJ Corporation**
  **Tokyo 100-0004 (JP)**
• **UACJ Foil Corporation**
  **Chuo-ku**
  **Tokyo**
  **1030026 (JP)**

(72) Inventors:
• **KATO, Osamu**
  **Tokyo 1000004 (JP)**
• **SAITO, Sohei**
  **Tokyo 1000004 (JP)**
• **HONKAWA, Yukiou**
  **Tokyo 1000004 (JP)**
• **WASAMOTO, Mitsuyuki**
  **Kusatsu-shi**
  **Shiga 525-0042UA (JP)**
• **KADOWAKI, Kenichi**
  **Kusatsu-shi**
  **Shiga 525-0042 (JP)**
• **YAMABE, Satoshi**
  **Kusatsu-shi**
  **Shiga 525-0042 (JP)**

(74) Representative: **Gulde & Partner**
**Patent- und Rechtsanwaltskanzlei mbB**
**Wallstraße 58/59**
**10179 Berlin (DE)**

(56) References cited:
JP-A- 2006 172 973    JP-A- 2007 066 633
JP-A- 2009 295 474    JP-A- 2010 108 971
US-A1- 2004 033 419    US-A1- 2007 059 604
US-A1- 2009 098 457

EP 2 738 855 B1

**Description**

**Technical Field**

The present invention relates to a current collector, an electrode structure using the same, a non-aqueous electrolyte battery, an electrical double layer capacitor, a lithium ion capacitor and to an electrical storage device.

**Background Art**

Lithium ion batteries have been receiving a demand for charging and discharging at high speed and long lifetime. It has been known that speed of charging and discharging as well as adhesion can be improved by enhancing the adhesion with the active material and the like by providing a conductive resin layer on the conductive substrate of the lithium ion secondary battery. In addition, there are cases where adhesion is improved by regulating the surface roughness Ra.

JP 2010-108971 A discloses a conductive adhesive layer, wherein the ratio of the surface roughness Ra and the thickness d, Ra/d is 0.03 or higher and 1 or lower.

JP 2010-212167 A discloses a current collecting foil, wherein the surface roughness Ra of a carbon coating layer is 0.5 to 1.0 $\mu$m, the surface area per unit area Sa is 30m$^2$ / m$^2$, and the pore volume Va of the carbon coating layer is 5cc / m$^2$ or less.

US 2009/0098457 A1 discloses an electrode structure comprising a current collector and an active material layer formed thereon. The current collector is preferably a thin metal foil, for instance an aluminum foil and has a surface roughness Ra of from 0.025 to 1.0 $\mu$m.

**SUMMARY OF INVENTION**

**Technical Problem**

However, there were cases where sufficient effect cannot be obtained by these techniques. The inventors of the present invention have found that the cause was the thickness of the conductive resin layer being thin, since when the surface roughness was made large with such thin conductive resin layer, the concave and convex becomes dense. Then, when the concave and convex are such dense, it would be difficult for the active material paste and the like to flow into the concave portion of the conductive resin layer when the active material paste is coated. This would result in occurrence of a slight gap between the conductive resin layer and the active material layer or the electrode material layer, which is unfavorable.

The present invention has been made in consideration of the afore-mentioned problems. An object of the present invention is to improve the adhesion between the surface of the conductive resin layer and the active material, which are provided to the current collector. Another object of the present invention is to improve the high rate characteristics or the electrode lifetime of a non-aqueous electrolyte battery, an electrical double layer capacitor, a lithium ion capacitor and the like which uses the current collector.

**Solution to Problem**

According to the present invention, a current collector prepared by forming a resin layer possessing conductivity on at least one side of the conductive substrate is provided. Here, the surface roughness Ra of the resin layer possessing conductivity is 0.1$\mu$m or higher and 1.0$\mu$m or lower. In addition, when the coating thickness of the resin layer possessing conductivity is taken as t [$\mu$m] and the average angle of inclination of the resin layer surface is taken as $\theta a$ [degree], $(1/3)t + 0.5 \leq \theta a \leq (1/3)t + 10$ is met, wherein $\theta a$ is obtained by measuring concave and convex of the surface of the resin layer and calculating using the following equation:

$$\theta a = \tan^{-1}\left(\frac{h_1 + h_2 + h_3 + \cdots + h_n}{L}\right)$$

wherein $h_1$, $h_2$, $h_3$, ........., $h_n$ is the height of from the bottom of a concave to the top of a convex observed within the reference length L.

According to this constitution, the coating thickness, surface roughness, and the degree of density of concave and convex of the resin layer possessing conductivity can be maintained in a balanced range. Therefore, the properties which are considered to be trade-offs, i.e., coatability of the active material paste and the like, and the adhesion of the active material paste and the like, can be realized with good balance. That is, with this constitution, the adhesion between the surface of the conductive resin layer and the active material can be improved. Therefore, a non-aqueous electrolyte battery, an electrical double layer capacitor, and a lithium ion capacitor with improved high rate characteristics and improved electrode lifetime can be obtained by using the current collector.

In addition, according to the present invention, an electrode structure which uses the afore-mentioned current collector is provided. The resin layer possessing conductivity includes an active material layer or an electrode material layer is formed on the resin layer possessing conductivity.

According to such constitution, the use of a current collector having improved adhesion between the surface of the conductive resin layer and the active material and the like would allow the active material paste to flow smoothly into the concave portion of the conductive resin layer and firmly adhere. Therefore, an electrode structure which contributes to the improvement in high rate characteristics and lifetime of the electrode can be obtained.

In addition, according to the present invention, a non-aqueous electrolyte battery, an electrical double layer capacitor, a lithium ion capacitor, or an electrical storage device which uses the electrode structure is provided.

According to such constitution, an electrode structure which allows the active material paste to flow smoothly into the concave portion of the conductive resin layer and firmly adhere is used. Therefore, a non-aqueous electrolyte battery, an electrical double layer capacitor, and a lithium ion capacitor having superior improvement in high rate characteristics and electrode lifetime can be obtained.

**Advantageous Effects of Invention**

According to the present invention, the adhesion between the surface of the conductive resin layer and the active material or the like can be improved. Therefore, with the use of such current collector, a non-aqueous electrolyte battery, an electrical double layer capacitor, and a lithium ion capacitor having superior improvement in high rate characteristics and lifetime can be obtained.

**Brief Description of the Drawings**

[FIG. 1] This is a conceptual diagram for explaining the calculation method for the average angle of inclination $\theta a$.
[FIG. 2] This is a conceptual diagram for explaining the coatability and adhesion when $\theta a$ is high (upper limit $\theta a \leq (1/3)t + 10$).
[FIG. 3] This is a conceptual diagram for explaining the coatability and adhesion when $\theta a$ is low (lower limit $(1/3)t + 0.5 \leq \theta a$).

**Description of Embodiments**

Hereinafter, the embodiment of the present invention will be described with reference to the drawings. In the following explanation, the number average molecular weight and the weight average molecular weight mean the ones measured by GPC (gel permeation chromatography).

According to the present embodiment, a current collector comprising a resin layer possessing conductivity being formed on at least one side of a conductive substrate is provided. Each of the elements will be described in detail hereinafter.

<1. Conductive Substrate>

As the conductive substrate of the present invention, various metal foils can be used. As the metal foil, known metal foils used for an electrode structure, a non-aqueous electrolyte battery, an electrical double layer capacitor, a lithium ion capacitor, or an electrical storage device can be used, without any particular limitation. For example, an aluminum foil or an aluminum alloy foil can be used. In addition, a copper foil, a stainless steel foil, or a nickel foil can be used as a conductive substrate for a negative electrode. Here, an aluminum foil, an aluminum alloy foil and the like can be used for a high-voltage electrodes, such as those using lithium titanate as an active material. Among these, an aluminum foil, an aluminum alloy foil, and a copper foil are preferable from the viewpoint of its balance between the electrical conductivity and cost. The thickness of the foil can be adjusted depending on its application, and is preferably 7 to 100$\mu$m, particularly preferably 10 to 50$\mu$m. When the foil is too thin, the strength of the foil becomes insufficient, thereby causing difficulty in the coating process of the active material layer. On the other hand, when the foil becomes too thick, the active material layer or the electrode material layer must be made thin for such excess in the thickness, resulting in cases where sufficient capacity cannot be obtained.

<Resin Layer Possessing Conductivity>

The resin layer possessing conductivity used in the present embodiment (hereinafter referred to as "resin layer") is provided on one side or both sides of the afore-mentioned conductive substrate, and contains a resin and conductive particles. Here, a conventionally known resin layer possessing conductivity can be used as the resin layer possessing conductivity. For example, from the viewpoint of realizing both of the adhesion with the conductive substrate and the active material as well as superior coatability, it is preferable that the resin contains either one of a soluble nitrocellulose-based resin, an acryl-based resin, or a chitosan-based resin.

The method for forming the resin layer possessing conductivity used in the present embodiment is not particularly limited. Here, it is preferable to coat a solution or a dispersion containing a resin and a conductive particle onto the conductive substrate. As the method for coating, a roll coater, a gravure coater, a slit dye coater and the like can be used. The baking temperature of the resin layer possessing conductivity is preferably 100 to 250°C, and the baking time is preferably 10 to 60 seconds. Here, the baking temperature is the final temperature of conductive substrate. When the baking temperature is lower than 100°C, the soluble nitrocellulose-based resin would not harden sufficiently, and when the baking temperature exceeds 250°C, there are cases where the adhesion with the active material layer decreases. It is preferable that the resin used in the present embodiment contains either one of a soluble nitrocellulose-based resin, an acryl-based resin, or a chitosan-based resin. A conductive material (conductive particle) is added to the conductive resin layer in order to provide conductivity. Here, the electrical characteristics of the conductive resin layer is largely effected by its dispersibility. The present inventors have investigated the volume resistivity of the resin layer by adding the conductive particles to various resins, and have found that when the resin contains either one of the soluble nitrocellulose-based resin, the acryl-based resin or the chitosan-based resin, both of the adhesion with the conductive substrate and the active material as well as superior coatability can be realized.

<2-1. Soluble Nitrocellulose-based Resin>

In the present embodiment, the soluble nitrocellulose-based resin is a resin containing a soluble nitrocellulose as a resin component. Here, the soluble nitrocellulose-based resin may contain only the soluble nitrocellulose, or may contain a resin other than the soluble nitrocellulose. The soluble nitrocellulose is one type of cellulose, and is characterized by possessing a nitro group. Although soluble nitrocellulose is a cellulose having a nitro group, in contrast with other celluloses such as carboxy methyl cellulose (CMC) and the like, the soluble nitrocellulose is not widely used in electrodes, and have been conventionally used as a raw material of resin film or coatings.

The inventors of the present invention have found that high rate characteristics of a non-aqueous electrode battery can be greatly improved by first obtaining a soluble nitrocellulose-based resin composition by dispersing a conductive material in this soluble nitrocellulose, and then forming a resin layer containing the soluble nitrocellulose-based resin and the conductive material on the conductive substrate. The Nitrogen density of the soluble nitrocellulose used in the present invention is 10 to 13%, especially preferably 10.5 to 12.5%. When the Nitrogen density is too low, dispersion may not be sufficient depending on the type of conductive material. When the Nitrogen density is too high, the soluble nitrocellulose becomes chemically unstable, which would be dangerous when used for batteries. The Nitrogen density depends on the number of nitro group, and thus the Nitrogen density can be adjusted by adjusting the number of the nitro group. In addition, the viscosity of the soluble nitrocellulose is usually in the range of 1.0 to 6.5 second, preferably 1.0 to 6.0 seconds when observed by JIS K-6703. The acid content is preferably 0.006% or lower, especially preferably 0.005% or lower. When these values are not in such range, dispersibility of the conductive material and the battery characteristics may degrade.

The soluble nitrocellulose-based resin of the present embodiment can contain the soluble nitrocellulose by 100 parts by mass or other resin component may be used in combination. When the other resin component is used in combination, it is preferable that the soluble nitrocellulose-based resin is contained by 20 parts by mass or more, and is particularly preferable that the soluble nitrocellulose-based resin is contained by 25 parts by mass or more. Through an investigation conducted for the resistance of the conductive resin layer prepared by adding a conductive material to various resins, it became apparent that when the soluble nitrocellulose-based resin is contained by 20 parts by mass or more, the resistance of the resin layer can be greatly reduced, and sufficient high rate characteristics can be obtained. It is assumed that this result was obtained since when the amount of soluble nitrocellulose formulated is too small, improvement in dispersibility of the conductive material, which is obtained as an effect of formulating the soluble nitrocellulose, may not be obtained. Addition of 20 parts by mass or more of the soluble nitrocellulose-based resin can sufficiently lower the resistance of the resin layer.

The soluble nitrocellulose-based resin of the present embodiment can be used can be added with various resins in addition to the afore-mentioned soluble nitrocellulose. In the present embodiment, battery performance (including capacitor performance, hereinafter the same) was investigated to find that it is preferable to add melamine-based resin, acryl-based resin, polyacetal-based resin, or epoxy-based resin in combination. By such addition, the battery performance can be improved to a level equal to or higher than the case where the soluble nitrocellulose is used as a resin component by 100 parts by mass. Addition of such resins will be each described hereinafter.

The soluble nitrocellulose-based resin preferably contains a melamine-based resin. It is assumed that the hardenability of the resin is improved, adhesion with the conductive substrate is improved, and the battery performance is improved, since the melamine-based resin undergoes a crosslinking reaction with the soluble nitrocellulose. The amount of the melamine-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, the resin layer becomes too hard. This would cause detachment during the cutting and winding process, and there may be a case where the discharge rate characteristics decrease. As the melamine-based resin, butylated melamine, isobutylated melamine, methylated melamine and the like can be preferably used for example.

The soluble nitrocellulose-based resin preferably contains an acryl-based resin. The afore-mentioned acryl-based resin has superior adhesion especially with aluminum and copper. Therefore, addition of the acryl-based resin can improve the adhesion with the conductive substrate. The amount of the acryl-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the acryl-based resin, resin containing acrylic acid, methacrylic acid, and derivatives thereof as a main component, or an acrylic copolymer including such monomers can preferably be used. In particular, methyl acrylate, ethyl acrylate, methyl methacrylate, isopropyl methacrylate and their copolymer can be used. In addition, acryl-based compounds such as acrylonitrile, methacrylonitrile, acryl amide, methacryl amide and the like, and copolymer thereof can preferably be used. The weight average molecular weight of the acryl-based resin is, for example, 30,000 to 1,000,000, particularly for example 30,000, 40,000, 50,000, 60,000, 70,000, 80,000, 90,000, 100,000, 150,000, 200,000, 300,000, 400,000, 500,000, 600,000, 700,000, 800,000, 900,000, or 1,000000. The weight average molecular weight may be in the range of two values selected from the values exemplified above.

The soluble nitrocellulose-based resin may be used in a manner so that the solid content of the resin contains only the soluble nitrocellulose. However, in the present invention, the soluble nitrocellulose-based resin preferably contains a polyacetal-based resin. The afore-mentioned acetal-based resin is superior in compatibility with the soluble nitrocellulose. Therefore, suitable flexibility can be provided to the resin layer, and thus adhesion with the mixture layer after winding can be improved. The amount of the acetal-based resin being added shall be, 5 to 200 mass%, more preferably 20 to 150 mass%, when the soluble nitrocellulose as the resin component is taken as 100 mass% (by solids). When the amount added is less than 5 mass%, the effect is low. When the amount added exceeds 200 mass%, adverse effect is caused on the dispersibility of the conductive material. This may lead to a case where the discharge rate characteristics decrease. As the polyacetal-based resin, polyvinylbutyral, polyacetoacetal, polyvinylacetoacetal and the like can preferably be used. The weight average molecular weight of the acryl-based resin is, for example, 10,000 to 500,000, particularly for example 10,000, 20,000, 30,000, 40,000, 50,000, 60,000, 70,000, 80,000, 90,000, 100,000, 150,000, 200,000, or 500,000. The weight average molecular weight may be in the range of two values selected from the values exemplified above.

The soluble nitrocellulose-based resin preferably contains an epoxy-based resin. Since the epoxy-based resin is superior in adhesion with metal, the adhesion with the conductive substrate can be further improved. The amount of the epoxy-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the epoxy-based resin, glycidyl ether type resins such as bisphenol A type epoxy, bisphenol F type epoxy, tetramethylbiphenyl type and the like are preferable. The weight average molecular weight of the epoxy-based resin is, for example, 300 to 50,000, particularly for example 300, 500, 1,000, 2, 000, 3,000, 4,000, 5,000, 10,000, 20,000, or 50,000. The weight average molecular weight may be in the range of two values selected from the values exemplified above.

As discussed, the soluble nitrocellulose-based resin preferably contains at least one among a melamine-based resin; a polyacetal-based resin, and an epoxy-based resin; in addition to the soluble nitrocellulose.

In addition, the soluble nitrocellulose-based resin preferably contains at least one of an acryl-based resin and a polyacetal-based resin, in addition to the soluble nitrocellulose. By such combination, the discharge rate characteristics becomes particularly superior. In addition, it is further preferable that the amount of melamine-based resin is 10 to 40 mass%, and the amount of soluble nitrocellulose is 50 to 70 mass%, when the total amount of the acryl-based resin, polyacetal-based resin, melamine-based resin, and the soluble nitrocellulose is taken as 100 mass%. In such case, the discharge rate characteristics becomes further superior.

<2-2. Acryl-based Resin>

The acryl-based resin used in the present embodiment is formed from the monomers whose main component is acrylic acid, methacrylic acid, or derivatives thereof. The ratio of the acrylic component contained in the monomer of the acryl-based resin is for example 50 mass% or more, preferably 80 mass% or more. The upper limit is not particularly defined, and the monomer of the acryl-based resin may substantially contain only the acrylic component. In addition, the monomer of the acryl-based resin may contain one or more types of the acrylic component.

Among the acryl-based resin, an acryl-based copolymer containing as a monomer at least one of a methacrylic acid, a derivative thereof, and an acryl-based compound having a polar group. This is since when the acryl-based copolymer includes such monomer, high rate characteristics can be further improved. As the methacrylic acid or a derivative thereof, methacrylic acid, methyl methacrylate, ethyl methacrylate, isopropyl methacrylate and the like can be mentioned. As the acryl-based compound having a polar group, acrylonitrile, methacrylonitrile, acrylamide, methacrylamide and the like can be mentioned. Here, among the acryl-based compound having a polar group, an acryl compound having an amide group is preferable. As the acryl compound having an amide group, acrylamide, N-methylol acrylamide, diacetone acrylamide and the like can be mentioned.

The weight average molecular weight of the acryl-based resin is not particularly limited, however, it is preferably 30,000 or more and 200,000 or less. When the molecular weight is too small, the flexibility of the resin layer becomes low, resulting in occurrence of cracks in the resin layer when the current collector is wound with a small radius of curvature. This would lead to decrease in capacity of the battery and the like. When the molecular weight is too large, adhesion tends to lower. Weight average molecular weight can be measured with the resin solution before the addition of the conductive material, by using GPC (gel permeation chromatography).

<2-3. Chitosan-based Resin>

In the present embodiment, the chitosan-based resin is a resin including a chitosan derivative as the resin component. As the chitosan-based resin, a resin including a chitosan derivative by 100 mass% can be used, however, other resin component can be used in combination. When the other resin is used in combination, it is preferable that the chitosan derivative is contained by 50 mass% or higher, more preferably 80 mass% or higher with respect to the total resin component. As the chitosan derivative, for example, hydroxy alkyl chitosan, hydroxyl ethyl chitosan, hydoroxy propyl chitosan, hydroxyl butyl chitosan, and grycerylated chitosan and the like can be mentioned.

The chitosan-based resin preferably contains an organic acid. As the organic acid, pyromellitic acid, terephthalic acid and the like can be mentioned. The amount of the organic acid added is preferably 20 to 300 mass% with respect to the 100 mass% of the chitosan derivative, and is more preferably 50 to 150 mass%. When the amount of organic acid added is too small or is too large, it would become difficult to obtain the desired concave and convex geometry.

The weight average molecular weight of the chitosan derivative is, for example, 30,000 to 500,000, particularly for example 30,000, 40,000, 50,000, 60,000, 70,000, 80,000, 90,000, 100,000, 150,000, 200,000 or 500,000. The weight average molecular weight may be in the range of two values selected from the values exemplified above. The weight average molecular weight is obtained by GPC (gel permeation chromatography).

<2-4. Conductive Particle>

The current collector functions as a pathway of electrons which moves from the electrode to the opposite electrode, and thus conductivity is required at its surface. The soluble nitrocellulose-based resin, the acryl-based resin and the chitosan derivative are all insulating materials, and thus conductive particles need be added in order to provide conductivity. As the conductive particles used in the present embodiment, carbon powder and metal powder can be used, and the carbon powder is preferable. As the carbon powder, acetylene black, Ketjen black, furnace black, carbon nanotube and the like can be used. In addition, carbon fiber and carbon nanotube can be used so long as they have conductivity. Among these, acetylene black, having a relatively long aggregate and thus achieving improvement in conductivity with relatively small amount of addition, is preferably used. By saving the amount of acetylene black added, decrease in adhesion with the active material layer or the electrode material layer can be suppressed. The amount of the conductive particles added is preferably 20 parts by mass or more and 80 parts by mass or less with respect to 100 parts by mass of the resin in the resin layer. When the amount is less than 20 parts by mass, the resistance of the resin layer becomes high, and when the amount exceeds 80 parts by mass, the adhesion of the surface of the resin layer with the active material layer or the electrode material layer becomes low. The conductive material can be dispersed in the resin solution by using a planetary mixer, a ball mill, a homogenizer, and the like.

<3. Roughness of Resin Layer Surface, Ra>

The surface roughness of the resin layer possessing conductivity used in the present embodiment is preferably 0.1 $\mu$m or higher and 1.0$\mu$m or lower. Particular method for measuring the surface roughness is as follows. That is, arithmetical mean deviation of profile Ra is measured by using an arithmetical mean deviation of profile measurement instrument SE-30D (available from Kosaka Laboratory Ltd.) in accordance with JIS B0601 (1982). When the surface roughness Ra exceeds 1.0 $\mu$m, the concave and convex becomes large, resulting in deep grooves, and thus it becomes difficult for the active material paste to flow. On the other hand, when the surface roughness is lower than 0.1 $\mu$m, the concave and convex becomes small, resulting in shallow grooves, and thus it becomes difficult for the active material paste flown into the grooves to adhere firmly. Here, the value of surface roughness Ra may be in the range of two values selected from 0.1, 0.2, 0.3, 0.4, 0.5, 0.6, 0.7, 0.8, 0.9, and 1.0 $\mu$m.

When the coating thickness of the resin layer possessing conductivity used in the present embodiment is taken as t [$\mu$m] and the average angle of inclination of the resin layer surface is taken as $\theta$a [degree], it is preferable that t [$\mu$m] and $\theta$a [degree] are in the range of $(1/3)t + 0.5 \leq \theta a \leq (1/3)t + 10$. When t [$\mu$m] and $\theta$a [degree] are within this range, the surface of the resin layer possessing conductivity would allow the active material paste to easily flow entirely, and the adhesion of the active material to the surface of the resin layer can be improved. Here, coating thickness measuring machine "HAKATTARO G" (available from SEIKO-em) can be used to calculate the thickness of the resin layer as a difference in the thickness between the portion formed with the resin layer and the portion without the resin (portion only with the aluminum foil).

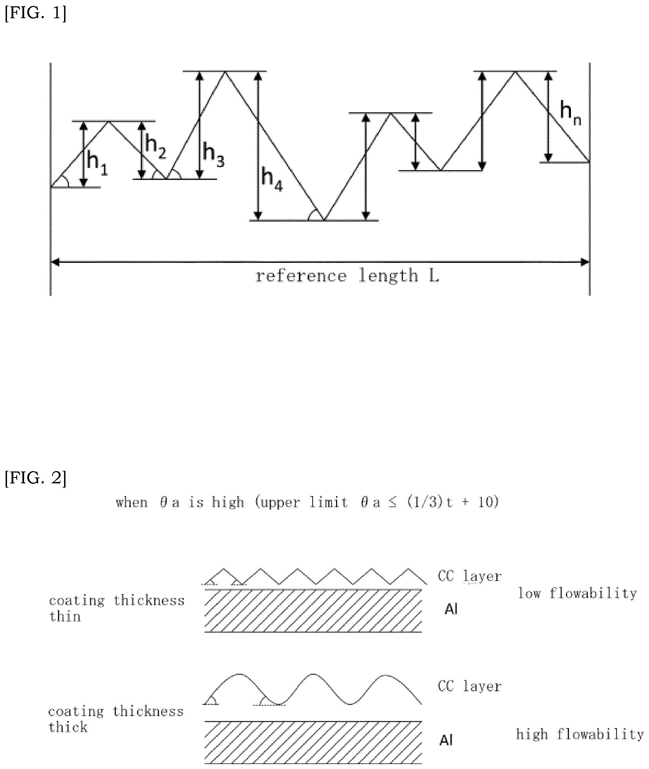

FIG. 1 is a conceptual diagram for explaining the calculation method for the average angle of inclination $\theta$a. The procedure for calculating the average angle of inclination $\theta$a is as follows. First, the surface of the resin layer is traced with a needle using an instrument for measuring the concave and convex of surfaces. The geometry of the surface is read by the instrument. The geometry of the concave and convex of the surface is read as a numerical value, and thus the difference between each of the hills and valleys can be calculated. Here, $\theta$a represents the angle of the triangle having a height of h. The angle can be calculated by the following equation with the sum of the height of each hills and the reference length L.

$$\theta a = \tan^{-1}\left(\frac{h_1 + h_2 + h_3 + \cdots + h_n}{L}\right)$$

The average angle of inclination $\theta$a can be obtained by first measuring the surface roughness with a surface roughness measurement instrument SE-30D (available from Kosaka Laboratory Ltd.). Then, the average angle of inclination $\theta$a can be calculated with the afore-mentioned equation. Here, h1, h2, h3, .........hn in the equation is the height of from the bottom of a concave to the top of a convex observed within the reference length L, which is obtained from the measurement.

<3-1. Relation Between Thickness t and Average Angle of Inclination $\theta$a>

FIG. 2 is a conceptual diagram for explaining the coatability and adhesion when $\theta$a is high (upper limit $\theta a \leq (1/3)t + 10$). The average angle of inclination $\theta$a [degree] is a value which specifies the condition of concave and convex of the surface of the conductive resin layer. As shown in FIG. 2, with a conductive resin layer having the same average angle of inclination $\theta$a [degree], the flowability of the active material paste would vary when the coating thickness t [$\mu$m] varies. When the coating thickness t is thin, the leveling property of the coating becomes low. Therefore, the top of the hill and the bottom of the valley becomes steep in the conductive resin layer. When the coating thickness t is thick, the leveling effect at the concave portion is exhibited well, and the concave portion and the convex portion tends to become round, even though the same coating is used. Therefore, even if the value of $\theta$a is the same, thinner coating thickness t would lead to difficulty in the flowability of a final coating. That is, even if the value of $\theta$a is the same, thicker coating thickness t would lead to higher flowability of the active material paste. Conversely, with a thin coating thickness t, the concave and convex becomes dense when $\theta$a becomes high, and there may be cases where the active material paste does not flow completely into the concave portion.

Accordingly, even with the same $\theta$a value, the difference in the coating thickness t would result in different flowability. When the average angle of inclination $\theta$a is high and the coating thickness t is thin, thus satisfying the conditions of $\theta a > (1/3)t + 10$, the concave and convex seen on the surface of the conductive resin layer becomes dense. Accordingly, it would be difficult for the coating to flow, thus improvement in high rate characteristics cannot be seen. In other words, when the average angle of inclination θa is high and the coating thickness t is thin, the active material paste and the like cannot flow into the concave portion of the concave and convex of the conductive resin layer, when the active material paste and the like is applied. Therefore, occurrence of a slight gap between the conductive resin layer and the active material layer or the electrode material layer would be seen, which leads to decrease in the battery characteristics. Accordingly, in a case where the average angle of inclination θa is high, thicker coating thickness t would provide better battery characteristics.

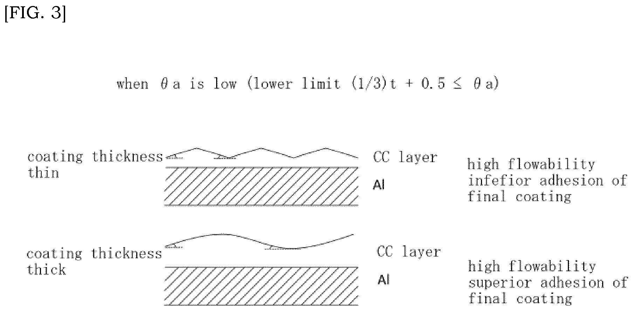

FIG. 3 is a conceptual diagram for explaining the coatability and adhesion when θa is low (lower limit (1/3)t + 0.5 ≤ θa). As shown in FIG. 3, when the average angle of inclination θa is low, the flowability of the active material paste is high regardless of the thickness of the coating thickness t. However, when the coating thickness t is thick, the concave portion and the convex portion tend to become round due to the leveling property. Accordingly, the surface of the conductive resin layer becomes leveled. That is, when the average angle of inclination θa is low and the coating thickness t is thick, thus satisfying the conditions of θa < (1/3)t + 0.5, the active material paste easily flow. However, the contact area between the surface of the conductive resin layer and the active material would not increase, and thus no improvement in adhesion is obtained. Therefore, improvement in high rate characteristics cannot be seen. In other words, when the average angle of inclination θa is low and the coating thickness t is thick, the leveling effect in the concave portion is exhibited well, and the concave portion and the convex portion tends to become round, even though the same coating is used. As a result, the contact area between the surface of the conductive resin layer and the active material decreases. Therefore, the battery characteristics decreases due to the decrease in adhesion. Accordingly, in a case where the average angle of inclination θa is low, thinner coating thickness t would provide better battery characteristics.

When the conductive paste for forming the conductive resin layer used in the present embodiment is applied on the surface of the conductive substrate by a gravure coater, the use of a coating of which leveling property is lowered by adjusting the viscosity and the surface tension would allow the transfer of the coating onto the substrate with the shape of the gravure plate. In addition, a surface smoother than the shape of the plate can be obtained by raising the leveling property, which can be realized by varying the viscosity and surface tension. Here, when the conditions of θa < (1/3)t + 0.5 is satisfied, the active material coating easily flows into the concave portion of the surface of the conductive resin layer, however, the contact area does not increase and the adhesion does not improve. Therefore, no improvement in the high rate characteristics is seen. On the other hand, when θa > (1/3)t + 10 is satisfied, the concave and convex on the surface of the conductive resin layer becomes dense. Accordingly, it would be difficult for the active material coating to flow into the concave portion of the surface of the conductive resin layer, and thus improvement in high rate characteristics cannot be seen. Therefore, when the coating thickness of the resin layer possessing conductivity used in the present embodiment is taken as t [μm] and the average angle of inclination of the resin layer surface is taken as θa [degree], it is preferable that t [μm] and θa [degree] satisfy the equation of (1/3)t + 0.5 ≤ θa ≤ (1/3)t + 10.

As discussed, when the average angle of inclination θa and the coating thickness t satisfy (1/3)t + 0.5 ≤ θa ≤ (1/3)t + 10, the active material paste easily flows to the entire surface, and the surface of the conductive resin layer would also have superior adhesion with the active material. This will be shown in the Examples hereinafter. That is, when the average angle of inclination θa and the coating thickness t are in such range, coating thickness of the resin layer possessing conductivity, surface roughness, and density of the concave and convex can be balanced. Therefore, a well balanced property of coatability of the active material paste and the adhesion of the active material paste can be obtained, in spite of the trade-off relationship between these properties. Accordingly, such composition can improve the adhesion between the surface of the conductive resin layer and the active material. Therefore, with the use of such current collector, a non-aqueous electrolyte battery, an electrical double layer capacitor, and a lithium ion capacitor having superior improvement in high rate characteristics and lifetime can be obtained.

<3-2. Method for Adjusting Thickness t and Average Angle of Inclination θa>

Here, Ra and θa (in the present application, collectively referred to as roughness) of the surface of the conductive resin layer can be varied by the type of resin, amount of formulation, physical property of the coating (viscosity, surface tension). In addition, Ra and θa can be varied also by the use of a smoothing roll.

(1) Control by Physical Property of Coating

In the present embodiment, the roughness of the surface of the conductive resin layer can be adjusted by controlling the formulation ratio of the resin, physical property of the coating, and time taken after the coating is applied until baking is conducted. When the formulation ratio of the resin is controlled, the added resin induces hardening, thereby providing a network structure and increase in roughness. When the physical property of the coating is controlled, viscosity and surface tension shall be placed with great importance. Coating with low viscosity and low surface tension has high leveling property, showing decrease in Ra and θa. When the viscosity and surface tension are high, Ra and θa increase. There is a preferable range in the viscosity and surface tension, depending on the resin formulation and the solvent used. Ra and θa can be controlled by such range. When either one of the surface tension or the viscosity is low, Ra and θa each decreases.

When the surface tension of the coating is in the range of 50 to 75 mN/m, the viscosity is preferably 1 mPa·S or higher and 10,000 mPa·S or lower. More preferably, the viscosity is 10 mPa·S or higher and 5,000 mPa·S or lower. When the surface tension of the coating is in the range of 20 to 50 mN/m, the viscosity is preferably 10 mPa·S or higher and 10,000 mPa·S or lower. More preferably, the viscosity is 50 mPa·S or higher and 5,000 mPa·S or lower.

(2) Control by Resin

When the type of the resin is varied, Ra mainly varies. There is a resin which forms a three dimensional network structure when hardened, and there is also a resin which is two dimensional when hardened. In the case of hardening resin such as melamine, epoxy, cellulose and the like, a micro level three dimensional network structure is formed, and thus Ra becomes higher. In the case of a resin such as olefin, Ra becomes low.

The resin which forms the conductive resin layer is preferably a chitosan derivative, or an acryl-based resin. A conductive material is added to the conductive resin layer to provide conductivity, however, its dispersibility largely affects the electric characteristics. As a result of conducting experiments with various resins, it became obvious that a soluble nitrocellulose-based resin, a chitosan derivative, and an acryl-based resin are preferable. In addition, a hardening agent such as an epoxy resin, a melamine resin, or a polyfunctional carboxylic acid can be added to the afore-mentioned resin.

<4. Electrode Structure>

The electrode structure of the present invention can be obtained by forming an active material layer or an electrode material layer on at least one side of the current collector of the present embodiment. The electrode structure for electrical storage device obtained by forming an electrode material layer will be explained later. First, in a case of an electrode structure obtained by forming an active material layer, a non-aqueous electrolyte battery can be manufactured with such electrode structure, a separator, a non-aqueous electrolyte and the like. In the electrode structure for the and the electrical storage device of the present embodiment, conventional parts for the non-aqueous electrolyte battery and the non-aqueous electrolyte battery, conventionally known parts for the non-aqueous battery can be used for the parts other than the current collector.

The active material layer formed in the present embodiment may be the ones conventionally proposed for the non-aqueous electrolyte battery. For example, a paste can be prepared by using $LiCoO_2$, $LiMnO_2$, $LiNiO_2$ or the like as an active material, using carbon black such as acetylene black as a conductive material, and dispersing them in PVDF as a binder. Such paste can be coated on a current collector of the present invention which uses the aluminum foil as a positive electrode, to obtain the positive electrode structure of the present embodiment.

In addition, a paste can be prepared by using black lead, graphite, mesocarbon microbeads and the like as the active material, dispersing the active material in CMC as the thickener, and then mixing the dispersion with SBR as the binder. The paste thus obtained is coated on the current collector of the present invention which uses a copper foil as the conductive substrate to give the negative electrode structure of the present invention.

<5. Non-aqueous Electrolyte Battery>

A separator is sandwiched in between the positive electrode structure and the negative electrode structure to constitute the non-aqueous electrolyte battery of the present embodiment. Here, the separator is immersed in an electrolyte for a non-aqueous electrolyte battery, containing a non-aqueous electrolyte. As the non-aqueous electrolyte and the separator, conventional ones used for the non-aqueous electrolyte battery can be used. For example, as the solvent of the electrolyte, carbonates, lactones and the like can be used. Here, $LiPF_6$ or $LiBF_4$ as electrolytes dissolved in a mixture of EC (ethylene carbonate) and EMC (ethylmethyl carbonate) can be used. As the separator, a membrane made of polyolefin having microporous can be used for example.

<6. Electrical Storage Device (Electrical Double Layer Capacitor, Lithium Ion Capacitor and the Like)>

The current collector of the present embodiment can be applied to an electrical storage device such as an electrical double layer capacitor, a lithium ion capacitor and the like, which require discharge at a large current density. The electrode structure for the electrical storage device of the present embodiment can be obtained by forming an electrode material layer on the current collector of the present embodiment. The electrical storage device such as the electrical double layer capacitor, the lithium ion capacitor and the like can be manufactured with the electrode structure, a separator, an electrolyte and the like. In the electrode structure and the electrical storage device of the present embodiment, conventional parts for the electrical double layer capacitor or the lithium ion capacitor can be used for the parts other than the current collector.

The positive electrode material layer and the negative electrode material layer both comprise an electrode material, a conductive material, and a binder. In the present invention, the electrode structure can be obtained by forming the electrode material layer on at least one side of the current collector of the present invention. Here, as the electrode material, the ones conventionally used as the electrode material for the lithium ion capacitor, or the electrical double layer capacitor can be used. For example, carbon powder such as active charcoal, black lead and the like, or a carbon fiber can be used. As the conductive material, carbon black such as acetylene black can be used. As the binder, for example, PVDF (polyvinylidene fluoride), or SBR (styrene butadiene rubber) can be used. In addition, the electrical storage device of the present invention can construct an electrical double layer capacitor or a lithium ion capacitor by fixing a separator in between the electrode structure of the present invention, and then immersing the separator in the electrolyte solution. As the separator, a membrane made of polyolefin having microporous, a non-woven fabric for an electrical double layer capacitor and the like can be used for example. Regarding the electrolyte solution, carbonates and lactones can be used as the solvent for example, and tetraetylammonium salt, triethylmethylammonium salt and the like can be used as the electrolyte, and hexafluorophosphate, tetrafluoroborate and the like can be used as the negative ion. Lithium ion capacitor is structured by combining a positive electrode of a lithium ion battery and a positive electrode of an electrode double layer capacitor. There is no particular limitation with respect to the manufacturing method, except that the current collector of the present embodiment is used.

The embodiments of the present invention have been described with reference to the drawings, however, the embodiments are merely an exemplification of the present invention. The present invention can adopt various compositions other than the ones described above.

**Examples**

The present invention will be described in details with reference to Examples, however, the present invention shall not be limited to the Examples.

<Examples 1 to 3>

As shown in Table 1, 54 parts by mass of soluble nitrocellulose (JIS K6703L1/4) as the main resin (the weight of the soluble nitrocellulose is the weight of solid content), 16 parts by mass of a copolymer of methyl acrylate and methacrylic acid (methyl acrylate : methacrylic acid = 95 : 5, weight average molecular weight 70,000) as an acryl resin, and 30 parts by mass of a methylolmelamin resin (number average molecular weight 2,700) as a melamine resin were dissolved in MEK to obtain a resin solution. To this resin solution, 60 mass% of acetylene black with respect to the resin component (solid content of the resin, hereinafter the same) was added, followed by dispersion with a ball mill for 8 hours. Adjustment was made so that the viscosity is 500 mPa·s, and the surface tension is 35 mN/m, to give a coating. This coating was applied on one side of an aluminum foil (JIS A1085) with a thickness of 20 $\mu$m by using a gravure coater. Current collectors were prepared so that the thickness of the coatings are each 1, 2, or 4 $\mu$m. Here, coating thickness measuring machine "HAKATTARO G" (available from SEIKO-em) was used to calculate the thickness of the resin layer as a difference in the thickness between the portion formed with the resin layer and the portion without the resin (portion only with the aluminum foil) Hereinafter, the same is applied for the method to measure coating thickness..

<Examples 4 to 6>

As shown in Table 1, 54 parts by mass of soluble nitrocellulose (JIS K6703L1/4) as the main resin (the weight of the soluble nitrocellulose is the weight of solid content), 16 parts by mass of a polyvinyl butyral resin (weight average molecular weight 90,000) as a poly acetal, and 30 parts by mass of a methylolmelamin resin (number average molecular weight 2,700) as a melamine resin were dissolved in MEK to obtain a resin solution. To this resin solution, 60 mass% of acetylene black with respect to the resin component was added, followed by dispersion with a ball mill for 8 hours. Adjustment was made so that the viscosity is 50, 2,000, or 8,000 mPa·s, and the surface tension is 35, 38. or 41 mN/m, to give a coatings for Examples 4 to 6, respectively. These coatings were applied on one side of an aluminum foil (JIS A1085) with a thickness of 20 $\mu$m by using a gravure coater, so that the thickness of the coatings are 2 $\mu$m. The coatings were heated for 30 seconds to give a current collector.

<Example 7>

As shown in Table 1, 40 parts by mass of soluble nitrocellulose (JIS K6703L1/4) as the main resin (the weight of the soluble nitrocellulose is the weight of solid content), 16 parts by mass of a polyvinyl butyral resin (weight average molecular weight 90,000) as a poly acetal, 30 parts by mass of a methylolmelamin resin (number average molecular weight 2,700) as a melamine resin, and 14 parts by mass of a bisphenol A-type epoxy resin (weight average molecular weight 2,900) as an epoxy resin were dissolved in MEK to obtain a resin solution. To this resin solution, 60 mass% of acetylene black with respect to the resin component was added, followed by dispersion with a ball mill for 8 hours. Adjustment was made so that the viscosity is 3,500 mPa·s, and the surface tension is 29 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Example 8>

As shown in Table 1, 80 parts by mass of soluble nitrocellulose (JIS K6703L1/4) as the main resin (the weight of the soluble nitrocellulose is the weight of solid content), and 20 parts by mass of a methylolmelamin resin (number average molecular weight 2,700) as a melamine resin were dissolved in MEK to obtain a resin solution. To this resin solution, 60 mass% of acetylene black with respect to the resin component was added, followed by dispersion with a ball mill for 8 hours. Adjustment was made so that the viscosity is 500 mPa·s, and the surface tension is 33 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Example 9>

As shown in Table 1, 100 parts by mass of soluble nitrocellulose (JIS K6703L1/4) as the main resin (the weight of the soluble nitrocellulose is the weight of solid content) was dissolved in MEK to obtain a resin solution. To this resin solution, 60 mass% of acetylene black with respect to the resin component was added, followed by dispersion with a ball mill for 8 hours. Adjustment was made so that the viscosity is 500 mPa·s, and the surface tension is 32 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Comparative Example 1>

As shown in Table 1, 54 parts by mass of soluble nitrocellulose (JIS K6703L1/4) as the main resin (the weight of the soluble nitrocellulose is the weight of solid content), 16 parts by mass of a copolymer of methyl acrylate and methacrylic acid (methyl acrylate : methacrylic acid = 95 : 5, weight average molecular weight 70,000) as an acryl resin, and 30 parts by mass of a methylolmelamin resin (number average molecular weight 2,700) as a melamine resin were dissolved in MEK to obtain a resin solution. To this resin solution, 60 mass% of acetylene black with respect to the resin component was added, followed by dispersion with a ball mill for 8 hours. Adjustment was made so that the viscosity is 11,000 mPa·s, and the surface tension is 35 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Comparative Example 2>

As shown in Table 1, 54 parts by mass of soluble nitrocellulose (JIS K6703L1/4) as the main resin (the weight of the soluble nitrocellulose is the weight of solid content), 16 parts by mass of a polyvinyl butyral resin as a polyacetal, and 30 parts by mass of a methylolmelamin resin as a melamine resin were dissolved in MEK to obtain a resin solution. To this resin solution, 60 mass% of acetylene black with respect to the resin component was added, followed by dispersion with a ball mill for 8 hours. Adjustment was made so that the viscosity is 20 mPa·s, and the surface tension is 28 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Comparative Example 3>

As shown in Table 1, to a resin emulsion containing polyethylene (weight average molecular weight 80,000) as a main resin, 60 mass% of acetylene black with respect to the resin component was added, followed by dispersion with a ball mill for 8 hours. Adjustment was made so that the viscosity is 1,000 mPa·s, and the surface tension is 68 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

<Comparative Example 4>

To a resin emulsion containing polypropylene (weight average molecular weight 100,000) as a main resin, 60 mass% of acetylene black with respect to the resin component was added, followed by dispersion with a ball mill for 8 hours. Adjustment was made so that the viscosity is 1,000 mPa·s, and the surface tension is 61 mN/m, to give a coating. The coating was applied on one side of an aluminum foil (JIS A1085) with a thickness of 20 μm by using a gravure coater, so that the thickness of the coating is 2 μm. The coating was heated for 30 seconds to give a current collector.

[Table 1]

|  | | Resin 1 | Mass% | Resin 2 | Mass% | Resin 3 | Mass% | Resin 4 | Mass% |
|---|---|---|---|---|---|---|---|---|---|
| Example 1 | | Soluble Nitrocellulose | 54 | Acryl | 16 | Melamine | 30 | - | - |
| Example 2 | | Soluble Nitrocellulose | 54 | Acryl | 16 | Melamine | 30 | - | - |
| Example 3 | | Soluble Nitrocellulose | 54 | Acryl | 16 | Melamine | 30 | - | - |
| Example 4 | | Soluble Nitrocellulose | 54 | Polyacetal | 16 | Melamine | 30 | - | - |
| Example 5 | | Soluble Nitrocellulose | 54 | Polyacetal | 16 | Melamine | 30 | - | - |
| Example 6 | | Soluble Nitrocellulose | 54 | Polyacetal | 16 | Melamine | 30 | - | - |
| Example 7 | | Soluble Nitrocellulose | 40 | Polyacetal | 16 | Melamine | 30 | Epoxy | 14 |
| Example 8 | | Soluble Nitrocellulose | 80 | - | - | Melamine | 20 | - | - |
| Example 9 | | Soluble Nitrocellulose | 100 | - | - | - | - | - | - |
| Comparative Example 1 | | Soluble Nitrocellulose | 54 | Acryl | 16 | Melamine | 30 | - | - |
| Comparative Example 2 | | Soluble Nitrocellulose | 54 | Polyacetal | 16 | Melamine | 30 | - | - |
| Comparative Example 3 | | Polyethylene | 100 | - | - | - | - | - | - |
| Comparative Example 4 | | Polypropylene | 100 | - | - | - | - | - | - |

<Examples 10 to 12>

As shown in Table 2, to a resin emulsion containing an acryl resin (60 mass% of acrylic acid, 20 mass% of methyl acrylate, and 20 mass% of butyl acrylate as the monomer, weight average molecular weight 110,000), 60 mass% of acetylene black with respect to the resin component was added, followed by dispersion with a ball mill for 8 hours. Adjustment was made so that the viscosity is 500 mPa·s, and the surface tension is 65 mN/m, to give a coating. The coating was applied on one side of an aluminum foil (JIS A1085) with a thickness of 20 μm by using a gravure coater, so that the thickness of the coatings are each 1, 2, and 4 μm. The coating was heated for 30 seconds to give a current collector.

<Examples 13 to 15>

As shown in Table 2, to a resin emulsion containing an acryl resin (50 mass% of acrylic acid, 20 mass% of buthyl acrylate, and 30 mass% of acryl amide as the monomer, weight average molecular weight 100,000), 60 mass% of acetylene black with respect to the resin component was added, followed by dispersion with a ball mill for 8 hours. Adjustment was made so that the viscosity of the coatings in Examples 13 to 15 are each 100, 500, and 4,500 mPa·s, and the surface tension are each 75, 65, and 55 mN/m, respectively. The coating was applied on one side of an aluminum foil (JIS A1085) with a thickness of 20 µm by using a gravure coater, so that the thickness of the coating is 2 µm. The coating was heated for 30 seconds to give a current collector.

<Example 16>

As shown in Table 2, to a resin emulsion containing an acryl resin (60 mass% of methacrylic acid, 20 mass% of buthyl methacrylate, and 20 mass% of acrylonitrile as the monomer, weight average molecular weight 110,000), 60 mass% of acetylene black with respect to the resin component was added, followed by dispersion with a ball mill for 8 hours. Adjustment was made so that the viscosity is 2,000 mPa·s, and the surface tension is 65 mN/m, to give a coating. The coating was applied on one side of an aluminum foil (JIS A1085) with a thickness of 20 µm by using a gravure coater, so that the thickness of the coating is 2 µm. The coating was heated for 30 seconds to give a current collector.

<Example 17>

As shown in Table 2, to a resin emulsion containing an acryl resin (80 mass% of methacrylic acid, 10 mass% of buthyl acrylate, and 10 mass% of acryl amide as the monomer, weight average molecular weight 140,000), 60 mass% of acetylene black with respect to the resin component was added, followed by dispersion with a ball mill for 8 hours. Adjustment was made so that the viscosity is 2,000 mPa·s, and the surface tension is 57 mN/m, to give a coating. The coating was applied on one side of an aluminum foil (JIS A1085) with a thickness of 20 µm by using a gravure coater, so that the thickness of the coating is 2 µm. The coating was heated for 30 seconds to give a current collector.

<Example 18>

As shown in Table 2, to a resin emulsion containing an acryl resin (50 mass% of acrylic acid, 15 mass% of methyl methacrylate, 10 mass% of buthyl acrylate, and 25 mass% of ethyl methacrylate as the monomer, weight average molecular weight 110,000), 60 mass% of acetylene black with respect to the resin content was added, followed by dispersion with a ball mill for 8 hours. Adjustment was made so that the viscosity is 500 mPa·s, and the surface tension is 65 mN/m, to give a coating. The coating was applied on one side of an aluminum foil (JIS A1085) with a thickness of 20 µm by using a gravure coater, so that the thickness of the coating is 2 µm. The coating was heated for 30 seconds to give a current collector.

<Comparative Example 5>

As shown in Table 2, to a resin emulsion containing an acryl resin (60 mass% of acrylic acid, 20 mass% of methyl acrylate, and 20 mass% of buthyl acrylate as the monomer, weight average molecular weight 110,000), 60 mass% of acetylene black with respect to the resin component was added, followed by dispersion with a ball mill for 8 hours. Adjustment was made so that the viscosity is 10 mPa·s, and the surface tension is 51 mN/m, to give a coating. The coating was applied on one side of an aluminum foil (JIS A1085) with a thickness of 20 µm by using a gravure coater, so that the thickness of the coating is 2 µm. The coating was heated for 30 seconds to give a current collector.

<Comparative Example 6>

As shown in Table 2, to a resin emulsion containing an acryl resin (50 mass% of methacrylic acid, 20 mass% of buthyl acrylate, and 30 mass% of acrylonitrile as the monomer, weight average molecular weight 110,000), 60 mass% of acetylene black with respect to the resin component was added, followed by dispersion with a ball mill for 8 hours. Adjustment was made so that the viscosity is 10,000 mPa·s, and the surface tension is 61 mN/m, to give a coating. The coating was applied on one side of an aluminum foil (JIS A1085) with a thickness of 20 µm by using a gravure coater, so that the thickness of the coating is 2 µm. The coating was heated for 30 seconds to give a current collector.

[Table 2]

| | Monomer 1 | Mass% | Monomer 2 | Mass% | Monomer 3 | Mass% | Monomer 4 | Mass % |
|---|---|---|---|---|---|---|---|---|
| Example 10 | Acrylic Acid | 60 | Methyl Acrylate | 20 | Butyl Acrylate | 20 | - | |
| Example 11 | Acrylic Acid | 60 | Methyl Acrylate | 20 | Butyl Acrylate | 20 | - | - |
| Example 12 | Acrylic Acid | 60 | Methyl Acrylate | 20 | Butyl Acrylate | 20 | - | - |
| Example 13 | Acrylic Acid | 50 | Butyl Acrylate | 20 | Acryl Amide | 30 | - | - |
| Example 14 | Acrylic Acid | 50 | Butyl Acrylate | 20 | Acryl Amide | 30 | - | - |
| Example 15 | Acrylic Acid | 50 | Butyl Acrylate | 20 | Acryl Amide | 30 | - | - |
| Example 16 | Methacrylic Acid | 60 | Butyl Acrylate | 20 | Acrytonitrile | 20 | - | - |
| Example 17 | Methacrylic Acid | 80 | Butyl Acrylate | 10 | Acryl Amide | 10 | - | - |
| Example 18 | Acrylic Acid | 50 | Methyl Methacrylate | 15 | Butyl Acrylate | 10 | Ethyl Methacrylate | 25 |
| Comparative Example 5 | Acrylic Acid | 60 | Methyl Acrylate | 20 | Butyl Acrylate | 20 | - | - |
| Comparative Example 6 | Methacrylic Acid | 50 | Butyl Acrylate | 20 | Acrylonitrile | 30 | - | - |

<Comparative Examples 19 to 21>

As shown in Table 3, 60 mass% of hydroxyalkyl chitosan (weight average molecular weight 80,000) and 40 mass% of trimellitic acid were dissolved in NMP to obtain a resin solution. To this resin solution, 60 mass% of acetylene black with respect to the resin component was added, followed by dispersion with a ball mill for 8 hours. Adjustment was made so that the viscosity of the coatings in Comparative Examples 19 to 21 are each 200, 2,000, and 4,500 mPa·s, and the surface tension are each 45, 41, and 41 mN/m, respectively. The coating was applied on one side of an aluminum foil (JIS A1085) with a thickness of 20 $\mu$m by using a gravure coater, so that the thickness of the coating is 2 $\mu$m. The coating was heated for 30 seconds to give a current collector.

[Table 3]

|  | Resin 1 | Mass% | Additive 1 | Mass% |
|---|---|---|---|---|
| Example 19 | Hydroxyalkyl Chitosan | 60 | Trimellitic Acid | 40 |
| Example 20 | Hydroxyalkyl Chitosan | 60 | Trimellitic Acid | 40 |
| Example 21 | Hydroxyalkyl Chitosan | 60 | Trimellitic Acid | 40 |

<Evaluation of Characteristics>

(1) Evaluation of Physical Properties

(1-1) Measurement of Arithmetical Mean Deviation of Profile Ra

Arithmetical mean deviation of profile Ra was measured by using a surface roughness measurement instrument SE-30D (available from Kosaka Laboratory Ltd.) in accordance with JIS B0601 (1982). The results of evaluation are shown in Tables 4, 5, and 6.

(1-2) Measurement of Average Angle of Inclination $\theta$a

The average angle of inclination $\theta$a was calculated with the following equation, from the results of measurement conducted by using a surface roughness measurement instrument SE-30D (available from Kosaka Laboratory Ltd.). Here, h1, h2, h3, .........hn in the equation is the height of each concave and convex observed within the reference length L, which is obtained from the measurement. The results of evaluation are shown in Tables 4, 5, and 6.

[Equation 2]

$$\theta a = \tan^{-1}\left(\frac{h_1 + h_2 + h_3 + \cdots + h_n}{L}\right)$$

(2) Evaluation of Discharge Rate Characteristics and Electrode Lifetime of Lithium Ion Battery

(2-1) Preparation of Lithium Ion Battery

A positive electrode was prepared as follows. A paste was prepared by dispersing LiCoO2 as an active material and acetylene black as a conductive material in PVDF (polyvinylidene fluoride) as a binder. The paste thus obtained was coated on each of the current collectors so that the thickness of the coatings are 70$\mu$m to give the positive electrode. A negative electrode was prepared as follows. A paste was prepared by dispersing black lead as an active material in CMC (carboxymethyl cellulose), followed by the addition of SBR (styrene butadiene rubber) as a binder. The paste thus obtained was coated on a copper foil with a thickness of 20$\mu$m so that the thickness of the coating is 70$\mu$m to give the negative electrode. A microporous separator made of polypropylene was sandwiched by these electrode structures, and was then cased in the battery casing to obtain a coin battery. A 1 mol/L solution of LiPF$_6$ in a solvent mixture of EC (ethylene carbonate) and EMC (ethylmethyl carbonate) was used as the electrolyte solution.

(2-2) Method for Evaluating Discharge Rate Characteristics

Discharge capacity of these lithium ion batteries (value relative to that at 0.2C, unit: %) was observed for the discharge current rate of 20C, when the upper voltage limit of charged state was 4.2 V, charge current was 0.2C, discharge final voltage was 2.8 V, and the temperature was 25°C. (Here, 1C is the value of the current A) when the current capacity (Ah) of the battery is taken by 1 hour (h). At 20C, the current capacity of the battery can be taken by 1/20h = 3 min. On the other hand, the battery can be charged by 3 minutes.) The results of evaluation are shown in Tables 4, 5, and 6.

Evaluation Criteria of Discharge Rate (Discharge Current Rate: 20C, Discharge Capacity Relative to That at 0.2C : 100%)
Superior : 70% or higher
Good : 60% or higher and lower than 70%
Fair : 50% or higher and lower than 60%
Poor : lower than 50%


(3) Evaluation of Discharge Rate Characteristics and Electrode Lifetime of Electrical Double Layer Capacitor

(3-1) Preparation of Electrical Double Layer Capacitor

A paste was prepared by dispersing activated charcoal as an electrode material and Ketjen black as a conductive material in PVDF as a binder. The paste thus obtained was coated on the current collector so that the thickness of the coating is $80 \mu m$ to give the positive and negative electrode structures. A non-woven fabric for an electrical double layer capacitor was sandwiched and fixed by two of these electrode structures, and thus the electrical double layer capacitor was structured. A solution obtained by adding 1.5 mol/L solution of $LiPF_6$ and tetrafluoroboric acid in propylene carbonate as a solvent was used as the electrolyte solution.

(3-2) Method for Evaluating Discharge Rate Characteristics

Discharge capacity of these lithium ion batteries (value relative to that at 1C, unit: %) was observed for the discharge current rate of 500C, when the upper voltage limit of charged state was 2.8 V, charge current was 1C, condition for the completion of charging was 2 hours, discharge final voltage was 0 V, and the temperature was 25°C. The results of evaluation are shown in Tables 4, 5, and 6.

Evaluation Criteria of Discharge Rate (Discharge Current Rate: 1C, Discharge Capacity Relative to That at 500C : 100%)
Superior : 80% or higher
Good : 70% or higher and lower than 80%
Fair : 60% or higher and lower than 70%
Poor : lower than 60%

[Table 4]

| | Viscosity | Surface Tension | Coating Thickness (μm) | Average Roughness Ra(μm) | Average Angle of Inclination θa (Degree) | Discharge Rate Characteristics (LIB) | Discharge Rate Characteristics (Capacitor) |
|---|---|---|---|---|---|---|---|
| Example 1 | 500 | 35 | 1 | 0.18 | 3.1 | Excellent | Excellent |
| Example 2 | 500 | 35 | 2 | 0-33 | 4.3 | Excellent | Excellent |
| Example 3 | 500 | 35 | 4 | 0.61 | 9.5 | Excellent | Excellent |
| Example 4 | 50 | 35 | 2 | 0.12 | 1.2 | Good | Good |
| Example 5 | 2000 | 38 | 2 | 0.56 | 6.4 | Excellent | Excellent |
| Example 6 | 8000 | 41 | 2 | 0.95 | 10.6 | Good | Good |
| Example 7 | 3500 | 29 | 2 | 0.25 | 3.9 | Excellent | Excellent |
| Example 8 | 500 | 33 | 2 | 0.18 | 2.0 | Good | Good |
| Example 9 | 500 | 32 | 2 | 0.28 | 3.5 | Good | Good |
| Comparative Example 1 | 11000 | 35 | 2 | 1.2 | 11.0 | Fair | Fair |
| Comparative Example 2 | 20 | 28 | 2 | 0.08 | 0.5 | Fair | Fair |
| Comparative Example 3 | 1000 | 68 | 2 | 0.07 | 0.4 | Poor | Poor |
| Comparative Example 4 | 1000 | 61 | 2 | 0.09 | 0.6 | Poor | Poor |

[Table 5]

| | Viscosity | Surface Tension | Coating Thickness (μm) | Average Roughness Ra(μm) | Average Angle of Inclination θa(degree) | Discharge Rate Characteristics (LIB) | Discharge Rate Characteristics (Capacitor) |
|---|---|---|---|---|---|---|---|
| Example 10 | 500 | 65 | 1 | 0.22 | 2.0 | Excellent | Excellent |
| Example 11 | 500 | 65 | 2 | 0.31 | 5.8 | Excellent | Excellent |
| Example 12 | 500 | 65 | 4 | 0.42 | 9.0 | Excellent | Excellent |
| Example 13 | 100 | 75 | 2 | 0.15 | 1.5 | Good | Good |
| Example 14 | 500 | 65 | 2 | 0.44 | 2.6 | Excellent | Excellent |
| Example 15 | 4500 | 55 | 2 | 0.88 | 10.0 | Good | Good |
| Example 16 | 2000 | 65 | 2 | 0.55 | 7.6 | Excellent | Excellent |
| Example 17 | 2000 | 57 | 2 | 0.76 | 8.2 | Excellent | Excellent |
| Example 18 | 500 | 65 | 2 | 0.23 | 3.2 | Excellent | Excellent |
| Comparative Example 5 | 10 | 51 | 2 | 0.07 | 1.0 | Fair | Fair |
| Comparative Example 6 | 10000 | 61 | 4 | 1.05 | 10.8 | Fair | Fair |

[Table 6]

|  | Viscosity | Surface Tension | Coating Thickness ($\mu$m) | Average Roughness Ra($\mu$m) | Average Angle of Inclination $\theta$a (degree) | Discharge Rate Characteristics (LIB) | Discharge Rate Characteristics (Capacitor) |
|---|---|---|---|---|---|---|---|
| Example 19 | 200 | 45 | 2 | 0.13 | 1.8 | Good | Good |
| Example 20 | 2000 | 41 | 2 | 0.69 | 5.0 | Excellent | Excellent |
| Example 21 | 4500 | 41 | 2 | 0.83 | 9.1 | Good | Good |

<Discussion on Results>

From the experimental results of the Examples and Comparative Examples, it can be concluded that when the average angle of inclination $\theta$a and the coating thickness t satisfy the equation of $(1/3)t + 0.5 \leq \theta a \leq (1/3)t + 10$, the active material paste easily flows on the entire surface, and the surface of the conductive resin layer would also have superior adhesion with the active material. That is, when the average angle of inclination $\theta$a and the coating thickness t are in such range, coating thickness of the resin layer possessing conductivity, surface roughness, and density of the concave and convex can be balanced. Therefore, a well balanced property of coatability of the active material paste and the adhesion of the active material paste can be obtained, in spite of the trade-off relationship between these properties. Accordingly, such construction can improve the adhesion between the surface of the conductive resin layer and the active material. Therefore, with the use of such current collector, a non-aqueous electrolyte battery, an electrical double layer capacitor, and a lithium ion capacitor having superior improvement in high rate characteristics and electrode lifetime can be obtained.

The present invention has been described with reference to the Examples. These Examples are merely an exemplification, and it should be noted that there are various possible alteration for the present invention, within the scope of the claims, and such alteration are also included in the present invention.

## Claims

1. A current collector comprising a conductive substrate and a resin layer possessing conductivity on at least one side of the conductive substrate; wherein
the resin layer possessing conductivity has a surface roughness Ra of 0.1 $\mu$m or higher and 1.0 $\mu$m or lower;
**characterized in, that** the resin layer possessing conductivity has a thickness t [$\mu$m] and a surface with an average inclination angle $\theta$a [degree], with t and $\theta$a satisfying an equation of $(1/3)t + 0.5 \leq \theta a \leq (1/3)t + 10$,
wherein $\theta$a is obtained by measuring concave and convex of the surface of the resin layer and calculating using the following equation:

$$\theta a = \tan^{-1}\left(\frac{h_1 + h_2 + h_3 + \cdots + h_n}{L}\right)$$

wherein $h_1$, $h_2$, $h_3$, ........., $h_n$ is the height of from the bottom of a concave to the top of a convex observed within the reference length L.

2. The current collector of Claim 1, wherein the resin layer possessing conductivity contains at least one resin selected from the group consisting of a soluble nitrocellulose-based resin, an acryl-based resin, and a chitosan-based resin.

3. The current collector of Claim 1, wherein the resin layer possessing conductivity contains at least one resin selected from the group consisting of an acryl-based resin, a polyacetal-based resin, a melamine-based resin, and an epoxy-based resin, in addition to a soluble nitrocellulose-based resin.

4. An electrode structure comprising the current collector of Claim 1 and an active material layer or an electrode material layer formed on the resin layer possessing conductivity.

5. A non-aqueous electrolyte battery, an electrical double layer capacitor, a lithium ion capacitor, or an electrical storage device; comprising the electrode structure of Claim 4.

**Patentansprüche**

1. Stromabnehmer, der ein leitfähiges Substrat und eine Leitfähigkeit besitzende Harzschicht auf wenigstens einer Seite des leitfähigen Substrats umfasst; wobei
die Leitfähigkeit besitzende Harzschicht eine Oberflächenrauheit Ra von 0,1 $\mu$m oder mehr und 1,0 $\mu$m oder weniger aufweist;
**dadurch gekennzeichnet, dass** die Leitfähigkeit besitzende Harzschicht eine Dicke t [$\mu$m] und eine Oberfläche mit einem durchschnittlichen Neigungswinkel $\theta a$ [Grad] aufweist, wobei t und $\theta a$ eine Gleichung (1/3)t + 0.5 $\leq \theta a \leq$ (1/3)t + 10 erfüllen,
wobei $\theta a$ durch Messen von Einbuchtungen und Ausbuchtungen der Oberfläche der Harzschicht und Berechnen unter Verwendung der folgenden Gleichung erhalten wird:

$$\theta a = \tan^{-1}\left(\frac{h_1 + h_2 + h_3 + \cdots + h_n}{L}\right)$$

wobei $h_1$, $h_2$, $h_3$, .........., $h_n$ die innerhalb der Bezugslänge L beobachtete Höhe vom Boden einer Einbuchtung zur Spitze einer Ausbuchtung ist.

2. Stromabnehmer nach Anspruch 1, wobei die Leitfähigkeit besitzende Harzschicht wenigstens ein Harz enthält, das ausgewählt ist aus der Gruppe bestehend aus einem löslichen Harz auf Basis von Nitrocellulose, einem Harz auf Acrylbasis und einem Harz auf Basis von Chitosan.

3. Stromabnehmer nach Anspruch 1, wobei die Leitfähigkeit besitzende Harzschicht zusätzlich zu einem löslichen Harz auf Basis von Nitrocellulose wenigstens ein Harz enthält, das ausgewählt ist aus der Gruppe bestehend aus einem Harz auf Acrylbasis, einem Harz auf Basis von Polyacetal, einem Harz auf Basis von Melamin und einem Harz auf Epoxidbasis.

4. Elektrodenstruktur, die den Stromabnehmer nach Anspruch 1 und eine Aktivmaterialschicht oder eine Elektrodenmaterialschicht, die auf der Leitfähigkeit besitzenden Harzschicht ausgebildet ist, umfasst.

5. Batterie mit nichtwässrigem Elektrolyten, elektrischer Doppelschichtkondensator, Lithium-Ionen-Kondensator oder elektrische Speichervorrichtung, welche die Elektrodenstruktur nach Anspruch 4 umfasst.

**Revendications**

1. Collecteur de courant comprenant un substrat conducteur et une couche de résine possédant une capacité conductrice sur au moins un côté du substrat conducteur ; dans lequel
la couche de résine possédant une capacité conductrice présente une rugosité de surface Ra de 0,1 $\mu$m ou plus et 1,0 $\mu$m ou moins ;
**caractérisé en ce que** la couche de résine possédant une capacité conductrice présente une épaisseur t [$\mu$m] et une surface avec un angle d'inclinaison moyen $\theta a$ [degré], t et $\theta a$ satisfaisant à une équation de la forme (1/3)t + 0,5 $\leq \theta a \leq$ (1/3)t + 10,
dans lequel $\theta a$ est obtenu en mesurant le concave et le convexe de la surface de la couche de résine et en calculant au moyen de l'équation suivante :

**EP 2 738 855 B1**

$$\theta a = \tan^{-1}\left(\frac{h_1 + h_2 + h_3 + \cdots + h_n}{L}\right)$$

où $h_1$, $h_2$, $h_3$, ........., $h_n$ est la hauteur du bas d'un concave au haut d'un convexe, observés dans la longueur de référence L.

2. Collecteur de courant selon la revendication 1, dans lequel la couche de résine possédant une capacité conductrice contient au moins une résine choisie dans le groupe constitué d'une résine soluble à base de nitrate de cellulose, une résine à base d'acrylique, et une résine à base de chitosane.

3. Collecteur de courant selon la revendication 1, dans lequel la couche de résine possédant une capacité conductrice contient au moins une résine choisie dans le groupe constitué d'une résine à base d'acrylique, une résine à base de polyacétal, une résine à base de mélamine, et une résine à base d'époxy, en plus d'une résine soluble à base de nitrate de cellulose.

4. Structure d'électrode comprenant le collecteur de courant selon la revendication 1 et une couche de matériau actif ou une couche de matériau à électrode formée sur la couche de résine possédant une capacité conductrice.

5. Batterie à électrolyte non aqueux, condensateur double couche électrique, condensateur aux ions lithium, ou dispositif de stockage d'électricité, comprenant la structure d'électrode selon la revendication 4.

[FIG. 1]

reference length L

[FIG. 2]

when $\theta a$ is high (upper limit $\theta a \leq (1/3)t + 10$)

coating thickness thin

CC layer

Al

low flowability

coating thickness thick

CC layer

Al

high flowability

[FIG. 3]

when $\theta a$ is low (lower limit $(1/3)t + 0.5 \leq \theta a$)

coating thickness thin

coating thickness thick

CC layer

Al

CC layer

Al

high flowability
infefior adhesion of
final coating

high flowability
superior adhesion of
final coating

**EP 2 738 855 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010108971 A
- JP 2010212167 A
- US 20090098457 A1